# EUROPÄISCHE PATENTSCHRIFT

(11) **EP 3 976 302 B1**
(45) Veröffentlichungstag und Bekanntmachung des Hinweises auf die Patenterteilung: **19.07.2023**
(21) Anmeldenummer: 20728064.5
(22) Anmeldetag: 28.05.2020
(51) Int. Cl.: B23D 65/00, B27B 33/14, B23K 35/30, B32B 15/01, C21D 9/50, C22C 38/10, C22C 38/12, C22C 38/22, C22C 38/34, C21D 1/25, C21D 6/00, C21D 9/24

(54) **SCHNEIDGLIED FÜR EINE SÄGEKETTE UND VERFAHREN ZU DEREN HERSTELLUNG**
CUTTING MEMBER FOR A CHAINSAW AND METHOD OF MANUFACTURING THE SAME
ÉLÉMENT DE COUPE POUR UNE CHAÎNE À SCIER ET SON PROCÉDÉ DE FABRICATION

(30) Priorität: 28.05.2019 EP 19177092
(43) Veröffentlichungstag der Anmeldung: 06.04.2022
(73) Patentinhaber: Voestalpine Precision Strip GmbH, 3333 Böhlerwerk (AT)
(72) Erfinder: LEEB, Bernhard, 3352 St. Peter in der Au (AT); RÖCKLINGER, Gerhard, 3353 Biberbach (AT)
(74) Vertreter: Reitstötter Kinzebach
(86) Internationale Anmeldenummer: PCT/EP2020/064869
(87) Internationale Veröffentlichungsnummer: WO 2020/239925

(56) Entgegenhaltungen:
- EP-A1- 2 992 990
- DE-A1- 4 303 004
- DE-A1-102010 011 837
- US-A- 3 918 928
- US-A- 4 058 650

## Beschreibung

Die vorliegende Erfindung betrifft ein Schneidglied für eine Sägekette, eine mit derartigen Schneidgliedern ausgerüstete Sägekette für Motorkettensägen und ein Verfahren zur Herstellung derartiger Schneidglieder.

Motorkettensägen sind Sägen, welche als Schneid- oder Trennmittel eine geschlossene, mit Schneidkanten versehene Gliederkette aufweisen, die auf einer längsgestreckten Führungsschiene umläuft. Die Gliederkette umfasst üblicherweise Treibglieder, abwechselnd linksseitig und rechtsseitig angeordnete Schneidglieder und gegebenenfalls auch Zwischenglieder. Die einzelnen Glieder einer Sägekette sind jeweils beweglich mit Bolzen oder Nieten gegeneinander verbunden.

Der Antrieb der Sägekette erfolgt üblicherweise durch einen Verbrennungs- oder Elektromotor, der ein Ritzel antreibt, welches an einer Seite der Führungsschiene angeordnet ist und mit den Treibgliedern der Sägekette kraftübertragend zusammenwirkt.

Die Schneidglieder bestehen üblicherweise aus einem Schneidkopf und einem vorgelagerten zahnartig ausgebildeten Tiefenbegrenzer. Der Schneidkopf umfasst die für die spanabhebende Sägearbeit notwendige Zahnschaufel. Die Zahnschaufeln sind typischerweise als Halbmeißelzähne mit gebogener Anordnung von Dach- und Brustschneide oder als Vollmeißelzähne mit einem scharf gekanteten Übergang von Dach- und Brustschneide ausgebildet. Bei beiden Ausführungen dient das Zahndach zur Anhebung des Holzspans, wobei hingegen die Brustschneide die seitliche Trennung vom zu schneidenden Werkstoffs übernimmt. Die Spandicke wird hierbei durch den Abstand zwischen Dachschneide und Tiefenbegrenzer bestimmt.

Es sind auch Schneidglieder bekannt, die ohne gebogenen Schneidkopf und ohne Tiefenbegrenzer ausgeführt sind. Derartige alternative Schneidglieder sind beispielsweise in der internationalen Patentanmeldung WO2013/127542 A1 oder in der europäischen Patentanmeldung EP 1 083 031 B1 beschrieben.

Üblicherweise werden die Glieder einer Sägekette für Motorkettensägen, insbesondere für Holzarbeiten, aus niedrig legierten Vergütungsstahl hergestellt. Die Schneidhaltigkeit derartiger Sägeketten ist jedoch gering, sodass ein häufiges Nachschärfen erforderlich ist, was bei diesen Sägeketten durch den versierten Benutzer erfolgen kann. Aus dem Stand der Technik sind Verbesserungen der Standzeit hinsichtlich Verschleißbeständigkeit, Ermüdungsbeständigkeit, Festigkeit, sowie einer verbesserten Niedrig-Temperatur-Zähigkeit bekannt. So wurde bereits versucht die Verschleißbeständigkeit der Schneidzähne durch zumindest teilweises Beschichten, z.B. Hartverchromung einzelner Schneidezähne, zu verbessern. Jedoch ist die Hartverchromung einzelner Zähne aus ökologischen Gesichtspunkten als nachteilig einzustufen. Des Weiteren wurden Schneidglieder aus niedrig legiertem Vergütungsstahl gefertigt, wobei die Schneidköpfe aus Hartmetallplatten ausgeführt und mittels Hartlot stoffschlüssig verbunden sind. Derartige Ausführungsform ist beispielsweise in der europäischen Patentanmeldung EP2052821 B1 beschrieben. In diesem Zusammenhang finden Hartmetallplatten aus feinkörnigem Wolframcarbid, welche beispielsweise durch Kobalt zusammengehalten werden, mengenmäßig die größte Bedeutung.

Ein beachtlicher Fortschritt wird durch die Verwendung von Sägeketten aus Materialverbunden erzielt. Bei diesen Sägeketten bestehen die Schneidglieder der Sägekette aus zwei, den Anforderungen entsprechenden Werkstoffen, welche mittels Laser- oder Elektronenstrahl zu einem Werkstoffverbund verbunden werden. Für den Trägerteil wird eine bruchfeste, kostengünstige Stahllegierung und für den Schneidteil wird eine widerstandsfähige Schnellarbeitsstahllegierung eingesetzt, welche mit dem Trägerteil verschweißt wird.

Derartige Sägeketten sind beispielsweise in der europäischen Patentanmeldung EP 0 592 389 B1 oder der deutschen Patentanmeldung DE4303004C2 bzw. DE 10 2010 011 837 A1 beschrieben. Die dort beschriebenen Sägekettenglieder werden aus einem Werkstoffverbundband ausgestanzt, dass beispielsweise aus einem kostengünstigen ferritischen Stahlband als Trägerteil besteht, an das ein Schneidteil in Form eines hochverschleißfesten Schnellarbeitsstahldrahtes oder -streifens angeschweißt wurde. Die Schneidglieder werden dann mit den für die Vergütung des Schnellarbeitsstahls erforderlichen Parametern gehärtet und angelassen.

Mit herkömmlich kommerziell erhältlichen Werkstoffverbundbändern erreicht man durch die Vergütungsbehandlung am Schneidteil zwar eine sehr hohe Verschleißfestigkeit des Schnellarbeitsstahls, jedoch werden für das Trägerteil nur Zugfestigkeiten von ca. 1700 MPa erreicht. Derartige Festigkeitswerte am Trägerteil sind für den Einsatz in Sägeketten nicht ausreichend. Daher können Sägekettenglieder aus herkömmlichen Werkstoffverbundmaterialien trotz hervorragender Verschleißbeständigkeit des Schneidteiles wegen der unzureichenden Zugfestigkeit des Trägermaterials nicht eingesetzt werden. Zusätzlich liegt dem zu Grunde, dass für die eingesetzte Schnellarbeitsstahllegierung eine entsprechend hohe Austenitisierungstemperatur verwendet werden muss, welche für die Trägerlegierung aber bereits kornvergröbernd bzw. schädigend wirkt.

Der vorliegenden Erfindung liegt daher das technische Problem zugrunde, Schneidglieder für Sägeketten aus einem Werkstoffverbundband bereitzustellen, welches ein Schneidteil aus einem verschleißbeständigen Schnellarbeitsstahl und ein Trägerteil aus einem kostengünstigeren Stahlmaterial mit hoher Zugfestigkeit aufweist. Besonderes Augenmerk liegt hierbei auf der Vergütbarkeit des Trägermaterials, welches eine Vergütung zulässt, die einerseits eine ausreichend hohe Verschleißbeständigkeit des Schnellarbeitsstahls und andererseits ein vergütetes Trägerteil mit hoher Zugfestigkeit und Potential für die erforderliche Wärmebehandlung aufweist.

Gelöst wird dieses technische Problem durch das Schneidglied für eine Sägekette mit den Merkmalen des vorliegenden Anspruchs 1. Vorteilhafte Weiterbildungen des erfindungsgemäßen Schneidgliedes sind Gegenstand der abhängigen Patentansprüche.

Erfindungsgemäß wurde überraschend gefunden, dass es möglich ist, Schneidglieder für Sägeketten aus einem Werkstoffverbundband herzustellen, der einerseits einen verschleißfesten Schnellarbeitsstahl und andererseits ein Stahlmaterial mit entsprechend optimierten Eigenschaften für das Trägerteil umfasst, wobei das Stahlmaterial des Trägerteils im vergüteten Zustand eine Härte von mehr als 600 HV und eine Zugfestigkeit von mehr als 2000 MPa aufweist.

Bei dem erfindungsgemäßen Schneidglied erfüllt nun auch das Trägermaterial die erhöhten Anforderungen an Zugfestigkeit, welche aus der durch Verwendung von Schnellarbeitsstahl für das Schneidteil resultierenden höheren Standzeiten der Sägekette entstehen.

Der Erfindung liegt die Überlegung zugrunde, ein Trägermaterial bereitzustellen, welches der erhöhten Belastung standhält und eine Wärmebehandlung nicht im Sinne einer Optimierung des Schneidteils, sondern im Sinne einer Optimierung einer Kombination von Schneidteil und Trägerteil auszuwählen. Dazu wird erfindungsgemäß ein Trägermaterial gewählt, das nicht auf die üblichen für Bimetallhärtung erforderlichen Temperaturen ausgelegt ist. Überraschend wurde gefunden, dass bei einer Temperatur oberhalb der Austenitisierungstemperatur des Schnellarbeitsstahles, aber unterhalb der zur vollen Aushärtung des Schnellarbeitsstahls erforderlichen Temperatur, die gewünschte Härte des Trägermaterials von mehr als 600 HV und Zugfestigkeit von mehr als 2000 MPa erreicht werden kann. Daher wird die Härtung im Vergleich zur klassischen Schnellstahlhärtung bei einer etwas niedrigeren Temperaturen durchgeführt, wobei man gegebenenfalls eine Unterhärtung des Schnellarbeitsstahls des Schneidteils für das Optimum einer Kombination zwischen Schneidteil und Träger in Kauf nimmt.

Erfindungsgemäß ist die Stahllegierung des Trägerteils des erfindungsgemäßen Schneidglieds ein Werkzeugstahl. Überraschend wurde gefunden, dass spezielle Werkzeugstahllegierungen, unter den für die Vergütung von Schnellarbeitsstahl erforderlich Bedingungen, Härtewerte von mehr als 600 HV und eine Zugfestigkeit von mehr als 2000 MPa erreichen können. Derartige Stahllegierungen eignen sich daher ganz besonders für das Trägerteil des Werkstoffverbundbandes für die erfindungsgemäßen Schneidglieder.

Bislang verwendete niedrig legierte Stahllegierungen weisen zu geringe Verschleißbeständigkeits- bzw. Festigkeitswerte auf, etwas höher legierte Kaltarbeitsstähle hingegen versagen bei thermischer Belastung; speziell im Hartholzbereich oder wenn höhere Schnittleistungen gefordert werden.

Die hier gefundene Werkzeugstahllegierung des Trägerteils weist folgende Zusammensetzung auf (Angaben in Gewichtsprozent):

| | |
|---|---|
| • Kohlenstoff (C) | 0,4 bis 1 |
| • Silicium (Si) | bis 1,8 |
| • Mangan (Mn) | bis 0,6 |
| • Chrom (Cr) | 4,5 bis 12 |
| • Molybdän (Mo) | bis 3 |
| • Vanadium (V) | bis 2 |
| • Eisen (Fe) und erschmelzungsbedingte Begleitelemente und Verunreinigungen als Rest. | |

Bevorzugt weist die Stahllegierung des Trägerteils folgende Zusammensetzung auf (Angaben in Gewichtsprozent):

| | |
|---|---|
| • Kohlenstoff (C) | 0,45 bis 0,8 |
| • Silicium (Si) | bis 1,3 |
| • Mangan (Mn) | bis 0,6 |
| • Chrom (Cr) | 6 bis 10 |
| • Molybdän (Mo) | bis 1,6 |
| • Vanadium (V) | bis 1 |
| • Eisen (Fe) und erschmelzungsbedingte Begleitelemente und Verunreinigungen als Rest. | |

Die erfindungsgemäßen Schneidglieder können in Sägeketten für standardbetriebene Benzinkettensägen, für Kettensägen mit Elektro- bzw. Akkuantrieb oder mit alternativen Antriebssystemen eingesetzt werden.

Die Standzeiten der resultierenden Sägeketten übersteigen die Standzeiten herkömmlicher Ketten aus Kohlenstoffstahl um ein Vielfaches und eignen sich daher insbesondere für den maschinellen Einsatz. Einerseits bei der Baumfällung im Harvesterbetrieb wirkt sich die höhere Verschleißbeständigkeit sehr positiv in Hinblick auf abrasive Verschmutzungen durch z.B. Sand oder Erdreich im Fällbereich aus und andererseits im Hartholzbereich und in der Weiterverarbeitung von Rundholzsägen in der Schnittholz- und Palettenindustrie z.B. für das exakte Kappen von Bretterpaketen.

Mit dem nun möglich gewordenen Einsatz von Schnellarbeitsstahl als Schneidstoff, kann nicht nur die Verschleißbeständigkeit und somit die Schneidhaltigkeit der Schneidglieder verbessert werden, sondern aufgrund der höheren Zahnhärte kann durch Geometrievariationen die Schneidfreudigkeit der Sägekette entsprechend gesteigert werden. Zusätzlich werden die resultierenden Schnittkräfte der Schneidglieder aufgrund von geringerem Verschleißfortschritt an der Schneidkante signifikant reduziert, was sich speziell bei akkubetriebenen Kettensägen auf eine deutlich erhöhte Laufleistung auswirkt.

Aufgrund der hochfesten Stahllegierung des Trägerteils besitzt der Tiefenbegrenzer bei dem erfindungsgemäßen Schneidglied eine erhöhte Verschleißbeständigkeit gegenüber den aus dem Stand der Technik bekannten Schneidgliedern. Besonders vorteilhaft kann der Tiefenbegrenzer an seinem Kontaktbereich zum Schnittgut aus Schnellarbeitsstahl ausgebildet werden, um die Verschleißbeständigkeit zusätzlich zu verbessern.

Mit den erfindungsgemäßen Sägeketten kann auch Schneidgut geschnitten werden, in welchem sich metallische Fremdkörper, wie beispielsweise Nägel, Schrauben oder Klammern befinden. Die erfindungsgemäße Sägekette ist daher auch insbesondere für Abbrucharbeiten, Hoch- und Tiefbau bzw. generell rauhen Arbeitseinsätzen gut geeignet.

Gemäß einer bevorzugten Ausführungsform weist die Stahllegierung des Trägerteils im vergüteten Zustand eine Härte zwischen 630 und 750 HV und eine Zugfestigkeit zwischen 2100 und 2500 MPa auf.

Bevorzugt wird auch der für das Schneidteil verwendete Schnellarbeitsstahl dahingehend optimiert, dass seine Vergütung bei Temperaturen erfolgen kann, welche einerseits eine hohe Verschleißbeständigkeit des Schneidteils gewährleisten, aber andererseits die Ermüdungsfestigkeit des Trägerteils nicht nachteilig beeinflussen. Besonders bevorzugt wird daher ein Schnellarbeitsstahl für das Schneidteil des erfindungsgemäßen Schneidglieds verwendet, der folgende Zusammensetzung aufweist (Angaben in Gewichtsprozent):

| | |
|---|---|
| Kohlenstoff (C) | 0,5 bis 1,1 |
| Silicium (Si) | bis 0,5 |
| Mangan (Mn) | bis 0,5 |
| Chrom (Cr) | 3,5 bis 4,5 |
| Molybdän (Mo) | 2 bis 6 |
| Vanadium (V) | 0,5 bis 3,0 |
| Wolfram (W) | bis 3 |
| Kobalt (Co) | bis 10 |
| Eisen (Fe) und erschmelzungsbedingte Begleitelemente und Verunreinigungen als Rest. | |

Üblicherweise haben Schneidteil und Trägerteil der Schneidglieder einer Sägekette dieselbe Dicke, insbesondere wenn sie aus Bimetall hergestellt sind. Gemäß einer Variante der vorliegenden Erfindung kann das Schnellarbeitsstahl-Schneidteil, sowie ein gegebenenfalls vorhandener Tiefenbegrenzer aus Schnellarbeitsstahl eine geringere Dicke als das Trägerteil aufweisen. Die Dicke des Schneidteils kann beispielsweise 40-90 %, bevorzugt 50-80 % der Dicke des Trägerteils betragen. Die geringere Dicke des Schneidteils hat den Vorteil, dass die Herstellungskosten aufgrund der damit verbundenen Materialeinsparungen beim teureren Schnellarbeitsstahl reduziert werden, was insbesondere bei größer dimensionierten Schneidgliedern zum Tragen kommt. Ferner wird die Biegefähigkeit des Schneidteils erhöht, sodass kleinere Krümmungsradien realisiert werden können.

Die Erfindung betrifft auch eine Sägekette für Motorkettensägen, die die oben beschriebenen erfindungsgemäßen Treibglieder bzw. Schneidglieder und gegebenenfalls auch Zwischenglieder umfasst, welche mit Bolzen oder Nieten beweglich miteinander verbunden sind.

Die Erfindung betrifft auch die Verwendung der erfindungsgemäßen Sägekette in Rundholzsägen, in Harvestern, in Bretterpaketsägen, in Akkubetriebenen Kettensägen und in Kettensägen für Abbrucharbeiten bzw. in rauher Arbeitsumgebung.

Schließlich betrifft die Erfindung auch ein Verfahren zur Herstellung von erfindungsgemäßen Schneidgliedern nach Anspruch 1 wobei wenigstens ein erstes, zentrales flächiges Bandmaterial aus Schnellarbeitsstahl an dessen beiden Bandkanten entlang ein zweites bzw. drittes flächiges Bandmaterial aus einer vergütbaren und bruchfesten Stahllegierung mittels Schweißnähten zur Bildung eines Werkstoffverbundbandes miteinander verschweißt werden. Die Schneidglieder werden derart aus dem Verbundmaterial entnommen, dass das Trägerteil eines Schneidgliedes aus dem zweiten oder dritten flächigen Bandmaterial und das Schneidteil eines Schneidgliedes aus dem ersten flächigen Bandmaterial besteht. Die Entnahme erfolgt bevorzugt durch Ausstanzen bzw. Ausschneiden von Schneidgliederrohlingen. Nach den entsprechenden Umformschritten werden die Schneidglieder zum Härten auf eine Temperatur oberhalb der Austenitisierungstemperatur des Schnellarbeitsstahls erwärmt, abkühlt und gegebenenfalls mehrmals angelassen. Dabei beträgt die Temperatur oberhalb der Austenitisierungstemperatur des Schnellarbeitsstahls bevorzugt mehr als 1000°C und besonders bevorzugt liegt diese Temperatur im Bereich von 1050°C bis 1200°C. Zur Erzielung der erforderlichen Arbeitshärte bzw. Verschleißbeständigkeit werden die Schneidglieder bei 500°C-600°C gegebenenfalls mehrmals angelassen. Die Schneidglieder werden schließlich in an sich bekannter Weise angeschliffen bzw. geschärft.

Die zweiten und dritten flächigen Bandmaterialien bestehen aus der vergütbaren und bruchfesten Stahllegierung des Trägerteils gemäß Anspruch 1. Vorzugsweise bestehen die zweiten und dritten flächigen Bandmaterialien aus derselben Legierung. Der Tiefenbegrenzer kann aus dem zweiten oder dritten flächigen Bandmaterial bestehen. Vorzugsweise werden die Schneidgliederrohlinge aber derart aus dem Werkstoffverbundband entnommen, dass der Tiefenbegrenzer zumindest teilweise aus dem flächigen Bandmaterial aus Schnellarbeitsstahl besteht.

Die flächigen Bandmaterialien haben üblicherweise dieselbe Dicke. Wenn gemäß der oben beschriebenen Variante des erfindungsgemäßen Schneidglieds die Dicke des Schneidteils geringer als die Dicke des Trägerteils ausgeführt werden soll, werden vorzugsweise bereits die Bandmaterialien mit entsprechender Dicke gewählt. Bei einer Variante des erfindungsgemäßen Verfahrens hat daher das erste flächige Bandmaterial aus Schnellarbeitsstahl eine geringere Dicke als die zweiten und dritten flächigen Bandmaterialien. Vorzugsweise beträgt die Dicke des ersten flächigen Bandmaterials 40-90 %, besonders bevorzugt 50-80 % der Dicke der zweiten und dritten flächigen Bandmaterialien. Beim Verschweißen von Bandmaterialien unterschiedlicher Dicke können ausgeprägte Stufen an den Schweißnähten auftreten, die in geeigneten Nachbearbeitungsschritten beispielsweise mithilfe einer Glättungswalze abgeflacht werden können. Alternativ oder zusätzlich können die Stoßkanten der dickeren zweiten und dritten Bandmaterialien abgefast sein, um den Übergang gleichmäßiger zu gestalten.

Die Erfindung wird im Folgenden unter Bezugnahme auf in den beigefügten Zeichnungen dargestellte bevorzugte Ausführungsformen näher erläutert.

In den Zeichnungen zeigen:
- Fig. 1: einen Ausschnitt einer Sägekette in der Seitenansicht;
- Fig. 2: eine Ausführungsform eines Schneidglieds der Sägekette der Fig. 1; bestehend aus einem Werkstoffverbund und einer Schweißnaht;
- Fig. 3: einen Querschnitt durch den Schneidezahn eines erfindungsgemäßen Schneidgliedes;
- Fig. 4: einen Werkstoffverbund mit schematisch dargestellten Stanzrohlingen;
- Fig. 5: einen Querschnitt durch den Werkstoffverbund der Fig. 4 entlang der Linie V-V;
- Fig. 6: einen Fig. 5 entsprechenden Querschnitt durch eine Variante eines Werkstoffverbundes, bei dem der Schnellarbeitsstahl eine geringere Dicke d₂ aufweist;
- Fig. 7: ein Diagramm, welches den Einfluss von Härtetemperatur und Anlasstemperatur auf die Härte des Schneidstoffs wiedergibt;
- Fig. 8: Vergleichsaufnahmen des fortschreitenden Verschleißes an erfindungsgemäßen Schneidkanten und Schneidkanten des Standes der Technik; und
- Fig. 9: ein Diagramm des quantitativ gemessenen Verschleißes als Funktion des Zerspanwertes.

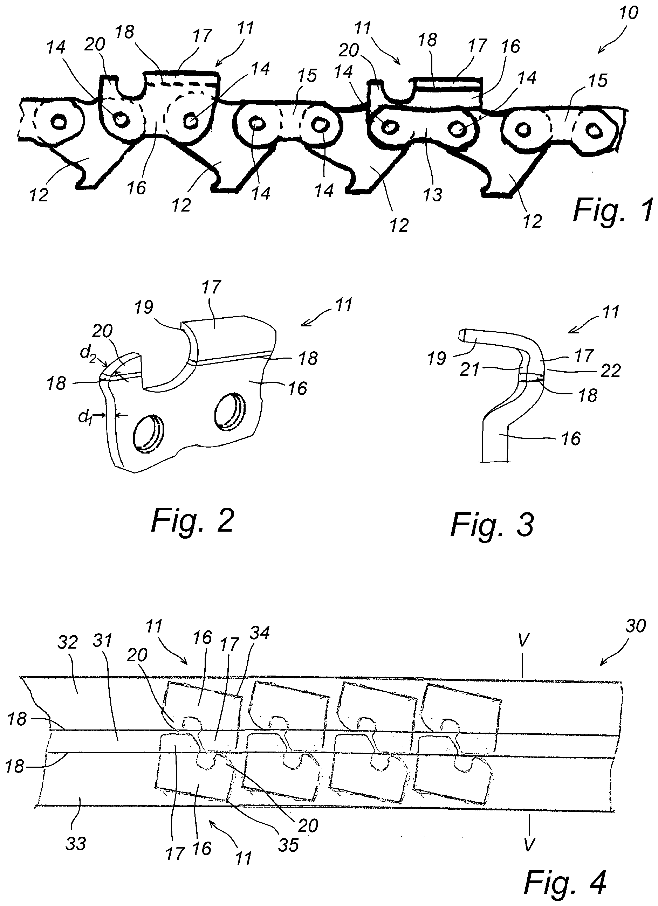

Figur 1 zeigt eine Seitenansicht einer Sägekette, wie sie beispielsweise in der europäischen Patentanmeldung EP 0 592 389 B1 näher erläutert ist. Die insgesamt mit der Bezugsziffer 10 bezeichnete Sägekette weist eine Abfolge von Schneidgliedern 11 und Treibgliedern 12 auf. Die Schneidglieder 11 sind zusammen mit Gegengliedern 13 über Nieten 14 mit den Treibgliedern verbunden. Im dargestellten Beispiel sind außerdem Treibglieder untereinander über Zwischenglieder 15 durch Nieten 14 miteinander verbunden. Jedes Schneidglied 11 weist ein Trägerteil 16 aus Baustahl und ein Schneidteil 17 aus Schnellarbeitsstahl auf. Das Trägerteil 16 und das Schneidteil 17 sind entlang einer Schweißnaht 18 miteinander verbunden. Die Schneidglieder 11 weisen Tiefenbegrenzer 20 auf, welche in der Ausführungsform der Fig. 1 vollständig aus der bruchfesten Stahllegierung des Trägerteils 16 bestehen.

Fig. 2 zeigt eine dreidimensionale Ansicht einer erfindungsgemäßen Ausführungsform eines Schneidgliedes 11. Das Schneidglied 11 der Ausführungsform der Fig. 2 entspricht im Wesentlichen dem Schneidglied 11 der Sägekette der Fig. 1. Das Trägerteil 16 ist aus Werkzeugstahl mittels Schweißnaht 18 mit dem Schneidteil 17 aus Schnellarbeitsstahl verbunden. Aus dem Schneidteil 17 wird der Schneidezahn 19 und, in Abweichung zu der Variante der Fig. 1, zumindest ein Teilbereich eines Tiefenbegrenzers 20 gebildet. Durch die deutlich verbesserte Standzeit des Schneidezahns wird nämlich auch der Tiefenbegrenzer einem verstärkten Abrasionsverschleiß ausgesetzt. Da in dieser erfindungsgemäßen Ausführungsform der Tiefenbegrenzer aber ebenfalls aus Schnellarbeitsstahl ausgeführt ist, kann dieser dem erhöhten Abrasionsverschleiß gut standhalten. Mit d₁ und d₂ werden in Fig. 2 die Dicke von Schneidteil und Trägerteil bezeichnet.

Fig. 3 zeigt einen Querschnitt eines Schneidgliedes im Bereich des Schneidezahns 19. Die Querschnittsdarstellung zeigt besonders die Position und die Form der Schweißnaht 18 beim Übergang vom Trägerteil 16 zum Schneidteil 17 besonders deutlich. Dargestellt sind auch die kleinere Schweißnahtbreite der Wurzelnaht an der Schneidzahnaußenseite 22 und die größere Schweißnahtbreite bzw. die Oberraupe an der spannungsreduzierten Schneidzahninnenseite 21 des Schneidezahns 19.

Fig. 4 zeigt ein Werkstoffverbundband 30 zur Herstellung von Schneidgliedern für die erfindungsgemäße Sägekette. Das Werkstoffverbundband wird mittels Laser- oder Elektronenstrahlschweißeinrichtungen hergestellt und durch gezielte Positionierung des Verbundbandes bei der Entnahme der Schneidgliedrohlinge und anschließender Umformung wird der Schweißnahtverlauf so angeordnet, dass sich die kleinere Schweißnahtbreite der Wurzelnaht an der Außenseite 22 des späteren Schneidezahns 19, und die größere Schweißnahtbreite bzw. die Oberraupe mit etwaigen Einbrandkerben bzw. mit etwaigen Schweißnahtrillen an der bei der Umformung des Schneidezahns entstehenden, spannungsreduzierten Schneidezahninnenseite 21 befindet. Dies ist insbesondere in der Querschnittsdarstellung der Fig. 3 gut erkennbar.

Wie man der Fig. 4 entnimmt, besteht das Werkstoffverbundband 30 aus einem ersten, zentralen flächigen Bandmaterial 31 aus Schnellarbeitsstahl, an dessen beiden Bandkanten entlang ein zweites bzw. drittes flächiges Bandmaterial 32, 33 entlang von Schweißlinien 18 angeschweißt wird. Die schematisch angedeuteten Stanzkonturen 34, 35 sind so angeordnet, dass sich das Trägerteil 16 der späteren Schneidglieder 11 in dem zweiten und dritten flächigen Bandmaterial 32, 33 aus Werkzeugstahl befindet, während das Schneidteil 17 im Bereich des ersten, zentralen flächigen Bandmaterials 31 aus Schnellarbeitsstahl angeordnet ist. Man erkennt, dass durch gezielte Anordnung der Stanzkonturen zu beiden Seiten des flächigen Schnellarbeitsstahlbandes 31 Schneidglieder 11 mit besonders wenig Materialverlust bzw. rechte / linke Schneidglieder aus dem Werkstoffverbundband herausgetrennt werden können. Bei dieser Ausführungsform sind die Stanzkonturen 34, 35 so angeordnet, dass sich der Tiefenbegrenzer 20 vollständig im Bereich des zweiten und dritten Bandmaterials 32, 33 befindet, also wie in Fig. 1 ohne Schnellarbeitsstahl ausgeführt ist. Man erkennt aber auch, dass durch gezielte Wahl der Geometrie der Stanzkonturen 34, 35 die Ausführungsform der Figur 2 herstellbar wäre, bei der die Spitze des Tiefenbegrenzer 20 dann in das erste Bandmaterial aus Schnellarbeitsstahl hineinreichen würde.

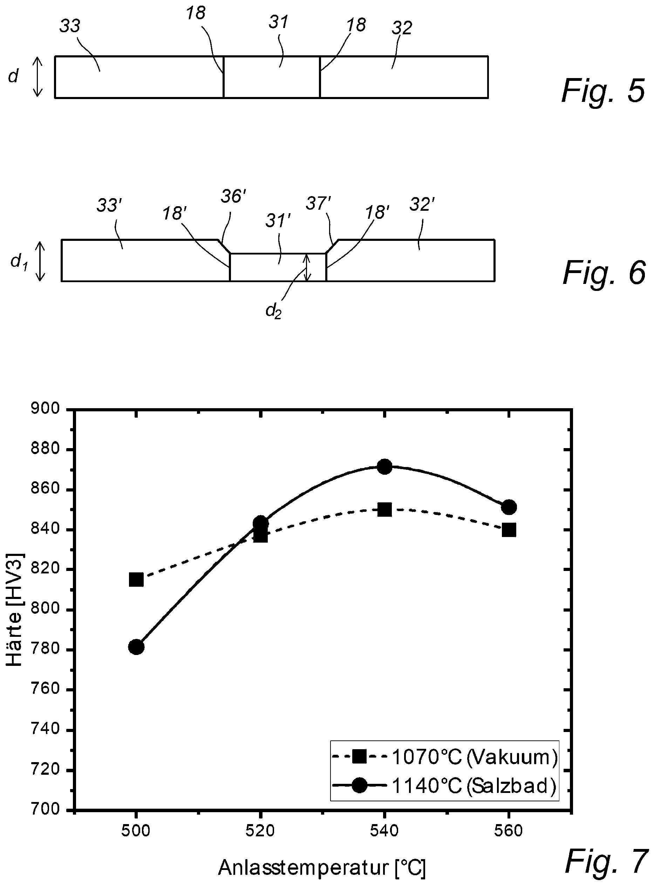

Die flächigen Bandmaterialien können gleiche oder unterschiedliche Dicken aufweisen. Mit "Dicke "wird im vorliegenden Zusammenhang die Abmessung der Bandmaterialien senkrecht zu ihrer flächigen Ausdehnung bezeichnet. In Fig. 5 ist ein Querschnitt entlang der Linie V-V aus Fig. 4 dargestellt. Bei dieser Variante weisen die Bandmaterialien 31,32, 33 dieselbe Dicke d auf. An den Schweißnähten 18 tritt bei dieser Variante keine Stufe auf.

Bei der in Fig. 6 dargestellten alternativen Ausführungsform weist das erste flächige Bandmaterial 31' aus Schnellarbeitsstahl eine geringere Dicke d₂ als die Dicke d₁ der flächigen Bandmaterialien 32',33' auf. Bei dieser Variante treten an den Schweißnähten 18' Stufen auf, die durch Nachbearbeitungsschritte abgeflacht werden können. Um den Dickensprung von vornherein abzumildern, können wie in Fig. 6 dargestellt, die an die Schweißnähte 18' grenzenden Stoßkanten 36', 37' der flächigen Bandmaterialien 32,33 abgefast sein.

### Vergleichsversuche

Der vorteilhafte Einsatz von Sägeketten, bei denen die Schneidglieder aus dem erfindungsgemäßen Materialverbund bestehen, wird in den folgenden Vergleichsversuchen dargestellt.

### 1. Wärmebehandlung

Ein besseres Verschleißverhalten als ein konventioneller Kohlenstoffstahl wird bei dem erfindungsgemäßen Materialverbund durch den Einsatz eines Schnellarbeitsstahls realisiert (siehe auch die unter 2. vorgestellten Verschleißuntersuchungen). Der Einsatz dieses Schnellarbeitsstahls wiederum erfordert jedoch eine erhöhte Austenitisierungstemperatur. Dementsprechend ist die werkstofftechnische Entwicklung eines geeigneten Trägerbandes für den erfindungsgemäßen Werkstoffverbund von großer Bedeutung. Es wurden daher Wärmebehandlungsversuche durchgeführt, wobei Proben in Salzbad gehärtet und anschließend zweimal angelassen wurden. Anschließend wurde die Härte, sowie die Zugfestigkeit bestimmt.

Der Einfluss von Härte- bzw. Anlasstemperatur auf die genannten Eigenschaften ist in der folgenden Tabelle 1 zusammengefasst. Man erkennt, dass unabhängig von der Wärmebehandlung die Festigkeitswerte des erfindungsgemäßen Trägermaterials höher, als die Festigkeitswerte des konventionellen Kohlenstoffstahls, sind.

**Tabelle 1: Einfluss von Härtetemperatur und Anlasstemperatur auf die Zugfestigkeit sowie Härte von unterschiedlichen Trägerbandmaterialien nach einer Kurzzeit-Wärmebehandlung im Salzbad (Salzbadhärtung bis zu 10 min).**

| Trägerbandmaterial | Härtetemperatur [°C] | Anlasstemperatur [°C] | Zugfestigkeit [MPa] | Härte [HV] |
|---|---|---|---|---|
| 63NiNb4 | 810 | 250 | 2205 | 649 |
| | | 270 | 2090 | 630 |
| | 830 | 250 | 2205 | 625 |
| | | 270 | 2035 | 601 |
| Erfindung | 1140 | 520 | 2330 | 658 |
| | | 540 | 2430 | 660 |
| | | 560 | 2264 | 652 |
| | 1160 | 520 | 2140 | 674 |
| | | 540 | 2380 | 703 |
| | | 560 | 2460 | 712 |

Des Weiteren wurden Wärmebehandlungsversuche durchgeführt, wobei Proben in einem Vakuumofen bei unterschiedlichen Temperaturen gehärtet und anschließend zweimal bei 550°C angelassen wurden. Anschließend wurden ebenfalls die Härte sowie die Zugfestigkeit bestimmt. Der Einfluss von Härte- bzw. Anlasstemperatur auf Zugfestigkeit und Härte sind in der folgenden Tabelle 2 zusammengefasst.

**Tabelle 2: Einfluss von Härtetemperatur und Anlasstemperatur auf die Zugfestigkeit sowie Härte auf das erfindungsgemäße Trägerband nach einer Langzeit-Wärmebehandlung im Vakuum (Vakuumhärtung über mehr als 60 min).**

| Trägerbandmaterial | Härtetemperatur [°C] | Anlasstemperatur [°C] | Zugfestigkeit [MPa] | Härte [HV] |
|---|---|---|---|---|
| Erfindung | 1030 | 550 | 2370 | 700 |
| | 1050 | | 2505 | 742 |
| | 1070 | | 2435 | 735 |

### 2. Verschleißbeständigkeit

Um die Verschleißbeständigkeit des erfindungsgemäßen Materialverbundes zu beurteilen, wurden Zerspanversuche an sogenannten Holzwolle-Leichtplatten durchgeführt. Derartige Platten werden aus langfaserigem, gehobeltem Fichten- oder Kiefernholz hergestellt, wobei diese Fasern durch Zement gebunden sind. Derartige Verschleißversuche stellen äußerst praxisnahe Fälle nach, welche insbesondere im Hinblick auf häufig auftretende abrasive Verschmutzungen im Holz, wie beispielsweise Sand oder typischerweise im Fällbereich durch Erdreich relevant sind.

Im Allgemeinen korreliert das Verschleißverhalten eines Schnellarbeitsstahls mit dessen Härte und Zähigkeit. Eine optimale Kombination dieser beiden Eigenschaften erreicht man durch das Härten und Anlassen des Schnellarbeitsstahls bei geringfügig höheren Temperaturen des Sekundärhärtemaximums. Das Sekundärhärtepotential wird durch die Härtetemperatur und Haltedauer bestimmt. So lässt sich bei geeigneter Wahl dieser Parameter mit unterschiedlichen Härtetechnologien (Salzbadhärtung oder Vakuumhärtung) dieselbe Härte einstellen. Figur 7 zeigt beispielhaft die Härte-Anlasskurven des Schneidstoffes, des erfindungsgemäßen Materialverbundes, welche einerseits im Vakuum und andererseits im Salzbad gehärtet wurden. Es zeigt sich das unabhängig der Härtetechnologie gleichwertige Härten im Schneidstoff erreicht werden und somit auch eine gleichwertige Verschleißbeständigkeit zu erwarten ist.

Für derartige Versuche wurden Hobelmesser aus dem Schneidstoff des erfindungsgemäßen Materialverbundes, im konkreten aus einem Schnellarbeitsstahl-Schneidteil (Zusammensetzung (in wt.%): 0,75% C, 0,3% Si, 0,25% Mn, 4% Cr, 5% Mo, 1% V, 1% W, 8% Co) und einem Werkzeugstahl-Träger (Zusammensetzung (in wt.%): 0,55% C, 1% Si, 0,4% Mn, 8% Cr, 0,5% Mo, 0,5% V) mit einem Schneidwinkel von 47 Grad hergestellt. Diese Hobelmesser wurden mit geometrisch entsprechenden Hobelmessern aus einem konventionellen Kohlenstoffstahl der Güte 63NiNb4, wie er herkömmlicherweise in der Sägeindustrie eingesetzt wird, verglichen. Die Bewertung des Verschleißfortschrittes wurde durch Vermessung der Schneidgeometrie nach definierten Zerspanwegen (Lw) durchgeführt.

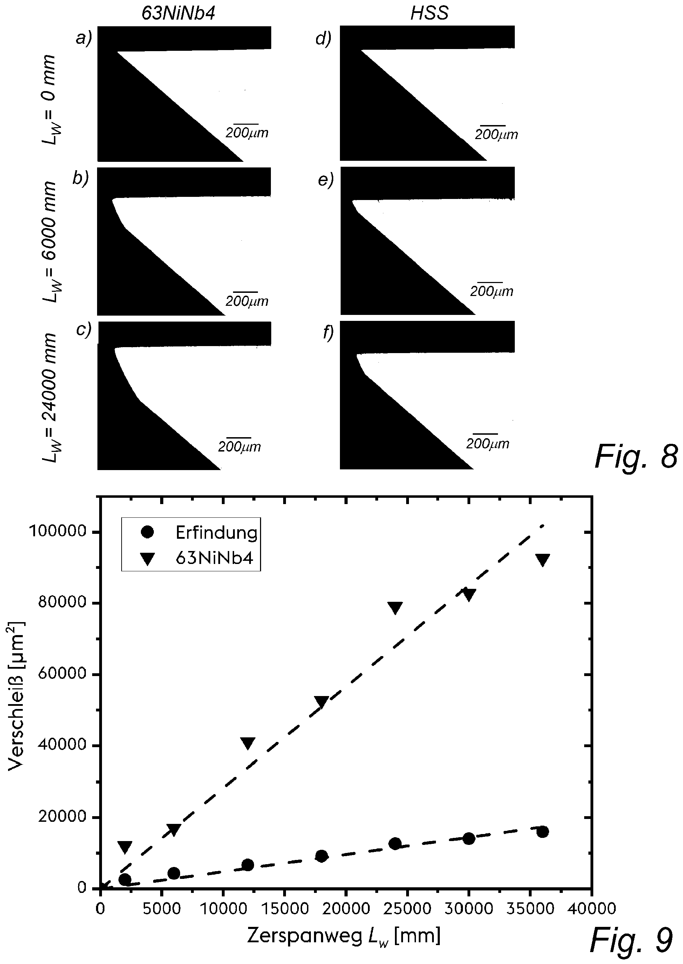

Fig. 8 zeigt repräsentativ den fortlaufenden Verschleiß der Schneidkanten. Die Teilabbildungen a), b) und c) in Fig. 8 zeigen den Verschleiß der herkömmlichen Hobelmesser aus Kohlenstoffstahl vor Beginn des Verschleißversuchs (Lw = 0 mm bzw. bei Zerspanwegen von 6.000 mm und 24.000 mm. Die Teilabbildungen d), e) und f) in Fig. 8 zeigen entsprechende Ergebnisse bei Hobelmessern, deren Schneidkante erfindungsgemäß aus Schnellarbeitsstahl besteht. Man erkennt deutlich, dass der Verschleiß an der Schneidkante des konventionellen Kohlenstoffstahls signifikant höher, als beim Schnellarbeitsstahles des erfindungsgemäßen Materialverbundes, ist.

Um den Verschleißfortschritt zu quantifizieren, wurde der geometrische Flächenverlust vermessen und über den Zerspanweg aufgetragen. Die entsprechenden Ergebnisse (quantitativ gemessener Verschleiß als Funktion des Zerspanwegs) sind in dem Diagramm der Fig. 9 für Schneidkanten aus Kohlenstoffstahl 63NiNb4 bzw. einem Schneidstoff des erfindungsgemäßen Materialverbundes dargestellt. Die Daten lassen sich gut durch Regressionsgeraden wiedergeben, aus deren Steigung Verschleißraten ermittelt werden können. So ergibt sich für den Kohlenstoffstahl 63NiNb4 eine Verschleißrate von 2,8304 µm²/mm, und für den Schnellarbeitsstahl des erfindungsgemäßen Materialverbundes eine Verschleißrate von 0,481 µm²/mm. Diese Auswertung verdeutlicht den besonders vorteilhaften Einsatz von Schneidgliedern, die aus dem erfindungsgemäßen Materialverbund hergestellt sind.

## Patentansprüche

1. Schneidglied (11) für eine Sägekette mit einem Trägerteil (16) aus einer bruchfesten Stahllegierung und einem mit dem Trägerteil (16) entlang einer Schweißverbindung (18) verschweißten Schneidteil (17) aus einem Schnellarbeitsstahl,
**dadurch gekennzeichnet,**
**dass** die Stahllegierung des Trägerteils (16) ein Werkzeugstahl ist, der folgende Zusammensetzung aufweist (Angaben in Gew.%):
| | |
|---|---|
| Kohlenstoff (C) | 0,4 bis 1,0 |
| Silicium (Si) | bis 1,8 |
| Mangan (Mn) | bis 0,6 |
| Chrom (Cr) | 4,5 bis 12 |
| Molybdän (Mo) | bis 3 |
| Vanadium (V) | bis 2 |
| Eisen (Fe) und erschmelzungsbedingte Begleitelemente und Verunreinigungen als Rest, | |
und **dass** die Stahllegierung des Trägerteils (16) im vergüteten Zustand durch Härten bei einer Temperatur oberhalb der Austenitisierungstemperatur des Schnellarbeitsstahls eine Härte von mehr als 600 HV und eine Zugfestigkeit von mehr als 2000 MPa aufweist.

2. Schneidglied gemäß Anspruch 1, **dadurch gekennzeichnet, dass** die Stahllegierung des Trägerteils (16) im vergüteten Zustand eine Härte zwischen 630 und 750 HV und eine Zugfestigkeit zwischen 2100 und 2500 MPa aufweist.

3. Schneidglied gemäß einem der Ansprüche 1 oder 2, **dadurch gekennzeichnet, dass** die Stahllegierung des Trägerteils (16) folgende Zusammensetzung aufweist (Angaben in Gew.%):
| | |
|---|---|
| Kohlenstoff (C) | 0,45 bis 0,8 |
| Silicium (Si) | bis 1,3 |
| Mangan (Mn) | bis 0,6 |
| Chrom (Cr) | 6 bis 10 |
| Molybdän (Mo) | bis 1,6 |
| Vanadium (V) | bis 1 |
| Eisen (Fe) und erschmelzungsbedingte Begleitelemente und Verunreinigungen als Rest. | |

4. Schneidglied gemäß einem der Ansprüche 1 bis 3, **dadurch gekennzeichnet, dass** der Schnellarbeitsstahl des Schneidteils (17) folgende Zusammensetzung aufweist (Angaben in Gew.%):
| | |
|---|---|
| Kohlenstoff (C) | 0,5 bis 1,1 |
| Silicium (Si) | bis 0,5 |
| Mangan (Mn) | bis 0,5 |
| Chrom (Cr) | 3,5 bis 4,5 |
| Molybdän (Mo) | 2 bis 6 |
| Vanadium (V) | 0,5 bis 3,0 |
| Wolfram (W) | bis 3 |
| Cobalt (Co) | bis 10 |
| Eisen (Fe) und erschmelzungsbedingte Begleitelemente und Verunreinigungen als Rest. | |

5. Schneidglied gemäß einem der Ansprüche 1 bis 4, **dadurch gekennzeichnet, dass** das Stahlmaterial des Trägerteils (16) und der Schnellarbeitsstahl des Schneidteils (17) einen Werkstoffverbund bilden, welcher mit Laser oder Elektronenstrahl über eine Schweißnaht (18) verschweißt sind, wobei die Schweißnaht in einem wenig belasteten Bereich des Schneidglieds (11) liegt.

6. Schneidglied gemäß einem der Ansprüche 1 bis 5, **dadurch gekennzeichnet, dass** die geometrisch schmälere Unterraupe der Schweißnaht (18) auf der Außenseite (22) des Schneidglieds (11) und die Oberraupe der Schweißnaht (18) auf der Innenseite (21) des Schneidglieds (11) angeordnet ist.

7. Schneidglied gemäß einem der Ansprüche 1 bis 6, **dadurch gekennzeichnet, dass** das Schneidglied (11) einen Tiefenbegrenzer (20) aufweist, der zumindest teilweise aus Schnellarbeitsstahl besteht.

8. Schneidglied gemäß einem der Ansprüche 1 bis 7, **dadurch gekennzeichnet, dass** das Schneidteil (17) eine geringere Dicke als das Trägerteil (16) aufweist.

9. Sägekette für Motorkettensägen, die Treibglieder (12), Schneidglieder (11) gemäß einem der Ansprüche 1 bis 8 und gegebenenfalls Zwischenglieder (15) umfasst, welche mit Bolzen oder Nieten (14) beweglich miteinander verbunden sind.

10. Verfahren zur Herstellung von Schneidglieder nach einem der Ansprüche 1 bis 8, wobei
wenigstens ein erstes flächiges Bandmaterial (31) aus Schnellarbeitsstahl an dessen beiden Bandkanten entlang ein zweites (32) bzw. drittes flächiges Bandmaterial (33) aus einer vergütbaren und bruchfesten Stahllegierung angeordnet wird;
die ersten, zweiten und dritten flächigen Bandmaterialien (31,32,33) entlang der Bandkanten mittels Schweißnähten (18) zur Bildung eines Werkstoffverbundbandes (30) miteinander verschweißt werden;
die Schneidglieder (11) derart aus dem Werkstoffverbundband (30) entnommen werden, dass das Trägerteil (16) eines Schneidgliedes (11) aus dem zweiten oder dritten flächigen Bandmaterial (32, 33) und das Schneidteil (17) eines Schneidgliedes (11) aus dem ersten flächigen Bandmaterial (31) besteht;
und
die Schneidglieder (11) zum Härten auf eine Temperatur oberhalb der Austenitisierungstemperatur des Schnellarbeitsstahls erhitzt, wieder abkühlt und gegebenenfalls mehrfach angelassen werden.

11. Verfahren gemäß Anspruch 10, **dadurch gekennzeichnet, dass** die Temperatur oberhalb der Austenitisierungstemperatur des Schnellarbeitsstahls mehr als 1000 °C beträgt.

12. Verfahren gemäß Anspruch 11, **dadurch gekennzeichnet, dass** die Temperatur oberhalb der Austenitisierungstemperatur des Schnellarbeitsstahls im Bereich von 1050 und 1200 °C liegt.

13. Verfahren gemäß Anspruch 12, **dadurch gekennzeichnet, dass** die Temperatur oberhalb der Austenitisierungstemperatur des Schnellarbeitsstahls im Bereich von 1100 und 1160 °C liegt.

14. Verfahren gemäß einem der Ansprüche 9 bis 13, **dadurch gekennzeichnet, dass** die Schneidglieder bei einer Temperatur im Bereich von 500 und 600 °C, vorzugsweise im Bereich von 520 und 560 °C, angelassen werden.

15. Verfahren gemäß einem der Ansprüche 10 bis 14, **dadurch gekennzeichnet, dass** die Dicke des ersten flächigen Bandmaterials (31) geringer als die Dicke der zweiten und dritten flächigen Bandmaterialien (32, 33) ist.

## Claims

1. Cutting member (11) for a saw chain having a carrier part (16) made of a breakproof steel alloy and a cutting part (17) made of high-speed steel welded to the carrier part (16) along a welded connection (18),
**characterised in that**
the steel alloy of the carrier part (16) is a tool steel comprising the following composition (figures in % by weight):
| | |
|---|---|
| carbon (C) | 0.4 to 1.0 |
| silicon (Si) | up to 1.8 |
| manganese (Mn) | up to 0.6 |
| chromium (Cr) | 4.5 to 12 |
| molybdenum (Mo) | up to 3 |
| vanadium (V) | up to 2 |
iron (Fe) and accompanying elements resulting from smelting and impurities as residue, and **in that** the steel alloy of the carrier part (16) has a hardness of more than 600 HV and a tensile strength of more than 2000 MPa in the tempered state due to hardening in the case of a temperature above the austenization temperature.

2. Cutting member according to claim 1, **characterised in that** the steel alloy of the carrier part (16) has a hardness between 630 and 750 HV and a tensile strength between 2100 and 2500 MPa in the tempered state.

3. Cutting member according to one of claims 1 or 2, **characterised in that** the steel alloy of the carrier part (16) has the following composition (figures in % by weight):
| | |
|---|---|
| carbon (C) | 0.45 to 0.8 |
| silicon (Si) | up to 1.3 |
| manganese (Mn) | up to 0.6 |
| chromium (Cr) | 6 to 10 |
| molybdenum (Mo) | up to 1.6 |
| vanadium (V) | up to 1 |
iron (Fe) and accompanying elements resulting from smelting and impurities as residue.

4. Cutting member according to one of claims 1 to 3, **characterised in that** the high-speed steel of the cutting part (17) has the following composition (figures in % by weight):
| | |
|---|---|
| carbon (C) | 0.5 to 1.1 |
| silicon (Si) | up to 0.5 |
| manganese (Mn) | up to 0.5 |
| chromium (Cr) | 3.5 to 4.5 |
| molybdenum (Mo) | 2 to 6 |
| vanadium (V) | 0.5 to 3.0 |
| tungsten (W) | up to 3 |
| cobalt (Co) | up to 10 |
iron (Fe) and accompanying elements resulting from smelting and impurities as residue.

5. Cutting member according to one of claims 1 to 4, **characterised in that** the steel material of the carrier part (16) and the high-speed steel of the cutting part (17) form a composite material that is welded with a laser or an electron beam via a welding seam (18), wherein the welding seam lies in a less loaded region of the cutting member (11).

6. Cutting member according to one of claims 1 to 5, **characterised in that** the geometrically narrower lower bead of the welding seam (18) is arranged on the outside (22) of the cutting member (11) and the upper bead of the welding seam (18) is arranged on the inside (21) of the cutting member (11).

7. Cutting member according to one of claims 1 to 6, **characterised in that** the cutting member (11) has a depth limiter (20) that consists at least partially of high-speed steel.

8. Cutting member according to one of claims 1 to 7, **characterised in that** the cutting part (17) has a lower thickness than the carrier part (16).

9. Saw chain for motorised chainsaws, comprising driving members (12), cutting members (11) according to one of claims 1 to 8, and optionally intermediate members (15), which are moveably connected to one another with bolts or rivets (14).

10. Method for producing cutting members according to one of claims 1 to 8, wherein
at least one first flat band of material (31) made of high-speed steel has a second (32) or third band of material (33) made of heat-treatable and breakproof steel alloy arranged along the two band edges of said first band of material;
the first, second and third flat bands of material (31, 32, 33) are welded to one another along the band edges by means of welding seams (18) to form a composite material band (30); the cutting members (11) are removed from the composite material band (30) such that the carrier part (16) of a cutting member (11) consists of the second or third flat band of material (32, 33) and the cutting part (17) of a cutting member (11) consists of the first flat band of material (31);
and
the cutting members (11) are heated to a temperature above the austenization temperature of the high-speed steel, cooled again and optionally tempered several times for hardening.

11. Method according to claim 10, **characterised in that** the temperature above the austenization temperature of the high-speed steel is more than 1000°C.

12. Method according to claim 11, **characterised in that** the temperature above the austenization temperature of the high-speed steel lies in the range of 1050 to 1200°C.

13. Method according to claim 12, **characterised in that** the temperature above the austenization temperature of the high-speed steel lies in the range of 1100 to 1160°C.

14. Method according to one of claims 9 to 13, **characterised in that** the cutting members are tempered in the range of 500 to 600°C, preferably in the range of 520 to 560°C.

15. Method according to one of claims 10 to 14, **characterised in that** the thickness of the first flat band of material (31) is lower than the thickness of the second and third flat bands of material (32, 33).

## Revendications

1. Organe de coupe (11) pour une chaîne de scie pourvu d'une partie support (16) à base d'un alliage d'acier incassable et une partie de coupe (17) soudée avec la partie support (16) le long d'une liaison par soudage (18) à base d'un acier rapide, **caractérisé en ce**
**que** l'alliage d'acier de la partie support (16) est un acier d'outillage qui présente la composition suivante (indications en % en poids) :
| | |
|---|---|
| Carbone (C) | 0,4 à 1,0 |
| Silicium (Si) | jusqu'à 1,8 |
| Manganèse (Mn) | jusqu'à 0,6 |
| Chrome (Cr) | 4,5 à 12 |
| Molybdène (Mo) | jusqu'à 3 |
| Vanadium (V) | jusqu'à 2 |
Fer (Fe) et éléments d'accompagnement et impuretés inhérents à la fusion en tant que résidus,
et **que** l'alliage d'acier de la partie support (16) dans l'état trempé par un durcissement à une température au-dessus de la température d'austénitisation de l'acier rapide présente une dureté supérieure à 600 HV et une résistance à la traction supérieure à 2000 MPa.

2. Organe de coupe selon la revendication 1, **caractérisé en ce que** l'alliage d'acier de la partie support (16) dans l'état trempé présente une dureté entre 630 et 750 HV et une résistance à la traction entre 2100 et 2500 MPa.

3. Organe de coupe selon la revendication 1 ou la revendication 2, **caractérisé en ce que** l'alliage d'acier de la partie support (16) présente la composition suivante (indications en % en poids) :
| | |
|---|---|
| Carbone (C) | 0,45 à 0,8 |
| Silicium (Si) | jusqu'à 1,3 |
| Manganèse (Mn) | jusqu'à 0,6 |
| Chrome (Cr) | 6 à 10 |
| Molybdène (Mo) | jusqu'à 1,6 |
| Vanadium (V) | jusqu'à 1 |
Fer (Fe) et éléments d'accompagnement et impuretés inhérents à la fusion en tant que résidus.

4. Organe de coupe selon l'une des revendications 1 à 3, **caractérisé en ce que** l'acier rapide de la partie de coupe (17) présente la composition suivante (indications en % en poids) :
| | |
|---|---|
| Carbone (C) | 0,5 à 1,1 |
| Silicium (Si) | jusqu'à 0,5 |
| Manganèse (Mn) | jusqu'à 0,5 |
| Chrome (Cr) | 3,5 à 4,5 |
| Molybdène (Mo) | 2 à 6 |
| Vanadium (V) | 0,5 à 3,0 |
| Tungstène (W) | jusqu'à 3 |
| Cobalt (Co) | jusqu'à 10 |
Fer (Fe) et éléments d'accompagnement et impuretés inhérents à la fusion en tant que résidus.

5. Organe de coupe selon l'une des revendications 1 à 4, **caractérisé en ce que** le matériau en acier de la partie support (16) et l'acier rapide de la partie de coupe (17) forment un matériau composite, lequel est soudé par laser ou par faisceau électronique par un cordon de soudure (18), où le cordon de soudure se situe dans une zone peu sollicitée de l'organe de coupe (11).

6. Organe de coupe selon l'une des revendications 1 à 5, **caractérisé en ce que** la chenillette inférieure du cordon de soudure (18) plus étroite géométriquement est disposée sur le côté extérieur (22) de l'organe de coupe (11) et la chenillette supérieure du cordon de soudure (18) est disposée sur le côté intérieur (21) de l'organe de coupe (11).

7. Organe de coupe selon l'une des revendications 1 à 6, **caractérisé en ce que** l'organe de coupe (11) présente un système de limitation de profondeur (20) qui est au moins partiellement constitué d'acier rapide.

8. Organe de coupe selon l'une des revendications 1 à 7, **caractérisé en ce que** la partie de coupe (17) présente une plus petite épaisseur que la partie support (16).

9. Chaîne de scie pour scies à chaîne motorisées qui comprend des organes d'entraînement (12), des organes de coupe (11) selon l'une des revendications 1 à 8 et éventuellement des organes intermédiaires (15), lesquels sont reliés entre eux en étant mobiles avec des boulons ou des rivets (14).

10. Procédé de fabrication d'organes de coupe selon l'une des revendications 1 à 8, dans lequel
au moins un premier matériau en bande (31) plat à base d'acier rapide, le long des deux bords de bande de celui-ci sont disposés un deuxième (32), respectivement, un troisième, matériaux en bande (33) à base d'un alliage d'acier trempé et incassable ;
les premier, deuxième et troisième matériaux en bandes (31, 32, 33) sont soudés ensemble le long des bords de bandes au moyen de cordons de soudure (18) pour la formation d'une bande composite (30) ;
les organes de coupe (11) sont prélevés à partir de la bande composite (30) de telle manière que la partie support (16) d'un organe de coupe (11) est constituée du deuxième ou du troisième matériau en bande (32, 33) plat et la partie de coupe (17) d'un organe de coupe (11) est constituée du premier matériau en bande (31) plat ;
et
pour le durcissement, les organes de coupe (11) sont chauffés à une température au-dessus de la température d'austénitisation de l'acier rapide, refroidis une nouvelle fois et éventuellement on recommence plusieurs fois.

11. Procédé selon la revendication 10, **caractérisé en ce que** la température au-dessus de la température d'austénitisation de l'acier rapide se situe à plus de 1000 °C.

12. Procédé selon la revendication 11, **caractérisé en ce que** la température au-dessus de la température d'austénitisation de l'acier rapide se situe dans la plage de 1050 à 1200 °C.

13. Procédé selon la revendication 12, **caractérisé en ce que** la température au-dessus de la température d'austénitisation de l'acier rapide se situe dans la plage de 1100 à 1160 °C.

14. Procédé selon l'une des revendications 9 à 13, **caractérisé en ce que** les organes de coupe sont traités à une température dans la plage de 500 à 600 °C, de préférence, dans la plage de 520 à 560 °C.

15. Procédé selon l'une des revendications 10 à 14, **caractérisé en ce que** l'épaisseur du premier matériau en bande (31) plat est inférieure à l'épaisseur des deuxième et troisième matériaux en bande (32, 33) plats.
